# EUROPEAN PATENT SPECIFICATION

(11) **EP 3 496 966 B1**
(45) Date of publication and mention of the grant of the patent: **09.10.2024**
(21) Application number: 17839919.2
(22) Date of filing: 15.06.2017
(51) Int. Cl.: B60K 15/067, B60K 15/07, F16G 11/12

(54) **A FUEL TANK ATTACHING STRUCTURE FOR A MOTOR VEHICLE**
KRAFTSTOFFTANKBEFESTIGUNGSSTRUKTUR FÜR EIN KRAFTFAHRZEUG
STRUCTURE DE FIXATION DE RÉSERVOIR DE CARBURANT POUR VÉHICULE À MOTEUR

(30) Priority: 11.08.2016 SE 1651100
(43) Date of publication of application: 19.06.2019
(73) Proprietor: Scania CV AB, 151 87 Södertälje (SE)
(72) Inventor: PASIC, Anel, 151 48 Södertälje (SE); BÖRJES, Markus, 125 44 Älvsjö (SE)
(74) Representative: Scania CV AB
(86) International application number: PCT/SE2017/050642
(87) International publication number: WO 2018/030931

(56) References cited:
- EP-A1- 1 965 116
- DE-A1- 102012 004 319
- DE-A1- 19 721 253
- DE-A1- 3 215 723
- US-A- 5 013 182
- US-A- 5 308 101
- US-B1- 6 557 814

## Description

### TECHNICAL FIELD

The present invention relates to a fuel tank attaching structure for a motor vehicle and a motor vehicle comprising a fuel tank attaching structure according to the claims.

### BACKGROUND AND PRIOR ART

Pressure tanks with pressurized gas are used in many applications. Tanks are usually manufactured of materials having high strength against internal and external forces, such as of metal or composite materials. Such tanks can be used in vehicles that are driven with compressed natural gas (CNG). In vehicles, the tanks may be retained in tank assemblies comprising 2-6, normally 4 cylindrical tanks. A tank assembly may be mounted to a chassis in a heavy vehicle, such as in a truck or a bus. In the assembly, the tanks may be held together in mounting brackets by means of distance elements filling the space between the tanks and tensioning straps surrounding the tanks. Relatively high holding forces from the tensioning straps are required to hold the tanks in place in the brackets. In heavy vehicles it may be difficult to keep sufficiently high holding forces during driving since the diameter of each tank varies with the gas pressure in the tank. This is because the tanks expands during a gas filling process when the gas pressure increases and contracts during gas consumption when the gas pressure decreases. A consequence of this is that when the tanks are in an expanded phase the holding force may be well over what is required to hold the tanks in place but when the tanks are in a contracted phase the holding force may be sufficient but relatively weaker. Further, the distance elements may be deformed or dislocated in course of time which also may have a negative effect on the holding force.

An example of a device for fastening a gas tank by means of a tensioning strap is disclosed by DE 10 2012 004 319 A1. The tensioning strap is wounded round the tank and two ends of the tensioning strap are connected to each other by means of a tensioning element with resilient properties for shortening the tensioning strap when the tank is in its contracted phase. However, this known device has the disadvantage that the tensioning element has to be quite long in order to maintain a sufficiently high holding force during the contracted phase and that it in addition protrudes form the gas tank. A consequence of this is that the tensioning element reduces the space which otherwise would be available for gas tanks.

The space available for gas tanks is limited because of legal requirement specifying the maximum permissible vehicle width and by the fact that the gas tanks are not allowed to extend under a frame side member of the chassis as this would limit the possibilities of rational production and service. The height is limited in the upward direction by the fact that the highest point of the gas tanks are not allowed to extend above the side frame member, otherwise it is difficult to fit bodyworks such as for examples load carriers to the vehicle and in downward direction by the requirement for adequate ground clearance. Further, the length may be limited by the wheelbase of the vehicle and/or by components such as for example silencers and batteries in the event the tanks are mounted along the frame side member between the front wheels and the rear wheels.

DE 32 15 723 A1 discloses a connecting part intended for a tensioning device for tensioning belts, chains and the like. US 6 557 814 B1 discloses a restraining strap for securing pressure vessels.

### SUMMARY OF THE INVENTION

One object of the present invention is to provide a solution in which the space mentioned is used as effectively as possible. An another object is to provide a fuel tank attaching structure which can cope with large diameter changes of the tanks but yet fixedly support them surely. Those objects and other objects are achieved by the features mentioned in the claims.

The invention relates to a fuel tank attaching structure for a motor vehicle having at least one expandable and contractible fuel tank for storing compressed gas mounted thereon, the fuel tank attaching structure comprising at least one bracket arranged to be fixed to a vehicle chassis for support of the at least one fuel tank and at least one tensioning strap arranged to be mounted around the fuel tank and adapted to fasten the fuel tank to the bracket, which tensioning strap comprises a first end and a second end between which a tensioning device is arranged to apply a holding force of the tensioning strap to the gas tank. The tensioning device comprises at least one first fastening element which is adapted to be connected to the first end of the tensioning strap and a crosspiece having a first surface and a second surface, at least one second fastening element which is adapted to be connected to the second end of the tensioning strap and a crosspiece having a first surface and a second surface, the first fastening element and the second fastening element are adapted to be arranged with their first surfaces turned towards each other, at least one connecting element adapted to extend displaceably through a hole in each crosspiece between the first fastening element and the second fastening element, a first fastening member adapted to be connected to a first end of the connecting element, a second fastening element adapted to be connected to a second end of the connecting element and spring means adapted to extend between the first fastening member and the second surface and between the second fastening member and the second surface whereby the spring means is arranged to apply a holding force of the tensioning strap to the gas tanks regardless of whether the gas tanks are in an expanded or contracted state by allowing the first fastening element and the second fastening element to be moved in the longitudinal direction of the connecting element.

Since the spring means is part of the tensioning strap it is possible to achieve a sufficiently high holding force under all operating conditions without reducing the space for fuel. Since the tensioning strap is movable in its longitudinal direction it follows the diameter changes of the tanks which results in high holding forces both in the expanded and in the contracted phase of the tank.

Preferably, the spring means comprises a number of cup springs stacked on each other. In this way it is possible to obtain an attaching structure with high holding forces in a small space. Further, by stacking the cup springs differently and use cup springs of different thickness and number it is possible to obtain different holding forces and spring characteristics in an advantageous manner.

Other features and advantages of the invention are apparent from the claims, the description of embodiments and the attached figures.

### BRIEF DESCRIPTION OF THE DRAWINGS

The invention will now be described in greater detail with reference to the appended drawings in which:
- Fig. 1: shows a schematic side view of a vehicle comprising a fuel tank attaching structure.
- Fig. 2: shows an end view of the fuel tank attaching structure in fig. 1.
- Fig. 3: shows a perspective view of a part of the fuel tank attaching structure in fig. 2.
- Fig. 4: shows a perspective view of a part of the fuel tank attaching structure in fig. 1.
- Fig. 5: shows an exploded view of a tensioning strap part.
- Fig. 6: shows a longitudinal section in the plane A-A in fig. 5 when the fuel tanks are in their contracted phase.
- Fig. 7: shows a longitudinal section in the plane A-A in fig. 5 when the fuel tanks are in their expanded phase.
- Fig. 8: shows different combinations of cup springs.

### DETAILED DESCRIPTION

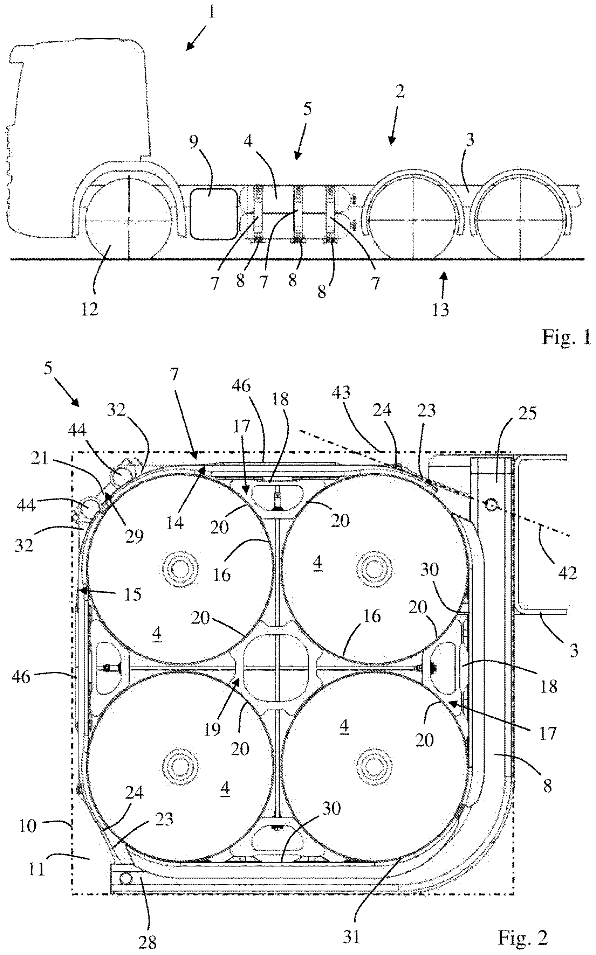

Fig. 1 shows a schematic side view of a motor vehicle 1 having a chassis 2 with two elongated parallel side beams 3 which are connected to each other with a number of cross beams which are not shown in the figure. At least one expandable and contractible fuel tank 4, in this example four gas tanks 4 for storing compressed gas, of which only two are visible from the side view are fastened to one of the side beams 3 by means of a fuel tank attaching structure 5 comprising at least one but in this example three brackets 8 fixed to the chassis 2 for supporting the at least one fuel tank 4 and at least one but in this example three tensioning straps 7 around the at least one fuel tank 4 for fasten it to respective bracket 8. Each tensioning strap 7 may be made of metal, preferably of steel. The vehicle 1 may be a heavy vehicle such as a truck or a bus. The fuel tank attaching structure 5 may also be referred to as a vehicle fuel tank attaching structure 5 or a vehicle fuel tank attachment structure 5.

In Fig. 2 an imaginary boundary line 10 is shown. The boundary line 10 surrounds a space 11 available for gas tanks 4. The space 11 is limited because of legal requirement specifying the maximum permissible vehicle width and by the fact that the gas tanks 4 are not allowed to extend under the side beam 3 as this would limit the possibilities of rational production and service. The height is limited in the upward direction by the fact that the highest point of the gas tanks 4 are not allowed to extend above the side beam 3, otherwise it is difficult to fit bodyworks such as for examples load carriers to the vehicle and in downward direction by the requirement for adequate ground clearance. Further, the length may be limited by the wheelbase of the vehicle and/or by external components 9 (fig. 1) such as for example silencers and batteries which may be mounted along the side beam 3 between the front wheels 12 and the rear wheels 13.

As can be seen in fig. 2, the outer surfaces 16 of the tanks 4 are supported by first distance elements 17 and a second distance element 19 which fills the space between the tanks 4, between the tanks 4 and the tensioning strap 7 and between the tanks 4 and the bracket 8. Each distance element 17,19 comprises support surfaces 20 each of which is adapted to lie against the outer surface 16 of a tank 4. Each distance element 17,19 is suitably an extruded aluminum profile. The second distance elements 19 is arranged between the tanks 4 in the centre of the space 11 with four support surfaces 20 facing the outer surfaces 16 of the tanks 4. Each of the first distance elements 17 is arranged at the edge of the space 11 with its support surfaces 20 facing the outer surface 16 of the tanks 4 and with a base surface 18 facing the tensioning strap 7 or the bracket 8. Thus, the fuel tank attaching structure 5 comprises five distance elements 17,19 supporting four tanks 4. In this way a stabile fuel tank structure may be provided. The tensioning strap 7 at least partly encloses the gas tanks 4 which rests on the bracket 8, which may be L-shaped and which may be divided into a first strap part 14 and a second strap part 15. A first end 24 of each strap part 14,15 may be engaged with one end of a holding device 23 which at its other end is engaged with a free shank end 25,28 of the bracket 8. A second end 32 of each strap part 14,15 may be engaged with a tensioner 29 which is adapted to draw the first strap part 14 and the second strap part 15 towards each other and thereby applying a holding force by which the gas tanks 4 are forced against a bearing surface 30 on the bracket 8. The tensioner 29 may be a threaded connection with for example at least one threaded rod 21 which at its one end may be engaged with the second end 32 of the first strap part 14 and which at its other end may be engaged with the second end 32 of the second strap part 15. The threaded rod 21 may at each of its ends be connected to a pin 44, preferably a clevis pin extending through its corresponding second end 32 with is longitudinal direction transversely to the longitudinal axis of the tensioning strap 7. Further, spacers 31 e.g. rubber sheets may be arranged between the tanks 4 and the bracket 8 and/or between the tanks 4 and the tensioning strap 7 or arranged to enclose at least a part of the tensioning strap 7 to protect the tanks 4 from being chafed and/or to prevent slipping of the outer circumferential surfaces of the gas tanks 4.

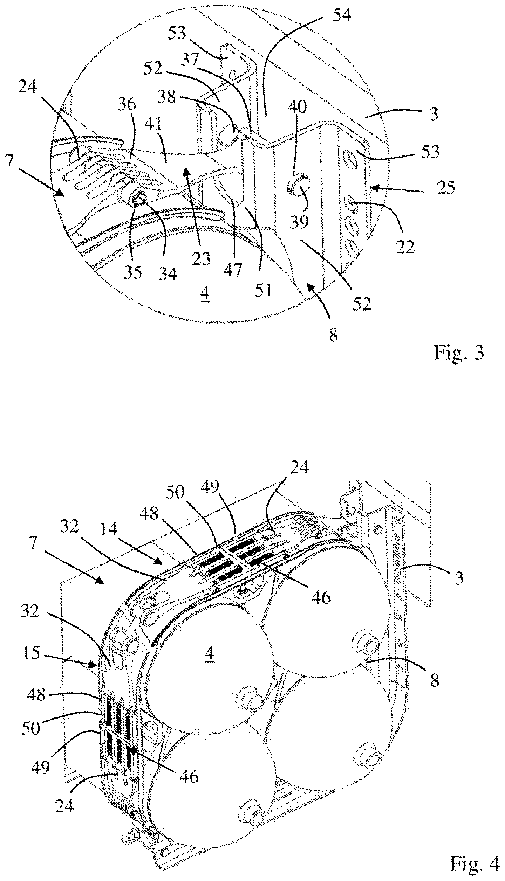

Fig. 3 shows a perspective view of the first end 24 of the first strap part 14. The first end 24 of the second strap part 15 may be of similar design. The first end 24 encloses a first pin 34, preferably a clevis pin, which fits into first through holes 35 in a first part 36 at the end of the holding device 23. The pin 34 may have thinner portions close to its ends for seating in the holes 35 so as to prevent the pin 34 from escaping from the holes 35. Locking rings, collars or similar can also be used for this purpose. At an opposite end of the holding device 23, there is a second part 37 with a third through hole 38 being parallel to the through holes 35 in the first part 36. The hole 38 in the second part 37 is adapted to receive a second pin 39, preferably a clevis pin which is part of the holding device 23 and having a length to extend outside the width of the second part 37 and with portions close to its ends to extend through mutually opposite apertures 40 in a channel-shaped portion 54 of the bracket 8 so as to fix the holding device 23, and thus the tensioning strap 7, to the bracket 8 allowing the holding device 23 to pivot around said second pin 39. Between the first part 36 and the second part 37 there is an intermediate part 41 which may be band-shaped or have any other elongated form suitable for the application in point. Further, the holding device 23 may extend through an opening 47, preferably a U-shaped opening, in the bracket 8. The opening 47 may be formed at the first- or at the second free shank end 25,28 of the bracket 8 or at the first- and at the second free shank end 25,28 (fig. 2).

It is to be noted that, as can be seen in Fig. 2, there is a slight deviation between a direction of an imagined plane 42 through the holding device 23 and the direction of an upper horizontal surface 43 of the gas tanks 4. The cause of the deviation is that the fixing point in the bracket 8 for the holding device 23 is positioned slightly below the upper surface 43 of the gas tanks 4 in order to provide a downwards directed holding force.

As can be seen in fig. 3, each bracket 8 has an essentially U-shaped cross section and a bottom member 51 adapted to face towards the gas tanks 4, a pair of mutually opposite side members 52 perpendicular to the bottom member 51 and a pair of outwardly directed flanges 53 parallel with the bottom member 51 and adapted to face towards the side beam 3. A number of through holes 22 for screws are formed in the flanges 53. The screws, which are not shown in the figure, are used together with nuts to fix the bracket 8 to the side beam 3. The bottom member 51 and the side members 52 forms a channel in the channel-shaped portion 54 which extends in the longitudinal direction of the bracket 8 between its first free shank end 25 and its second free shank end 28 (fig 2). The mutually opposite apertures 40 mentioned earlier are formed one in each side member 52 and the opening 47 also mentioned earlier is formed in the bottom member 51.

The diameter of each gas tank 4 in fig. 2 may vary with the gas pressure in the tank 4. This is because the tanks 4 expands during a gas filling process when the gas pressure increases and contracts during gas consumption when the gas pressure decreases. In order to ensure a sufficient holding force under all operating condition of a vehicle at least one tensioning device 46 is arranged at at least one tensioning strap 7 but preferably at all tensioning straps 7 in the fuel tank attaching structure 5 (fig. 1). Each tensioning strap 7 is tensioned by means of the tensioning device 46 which is adapted to connect the first end 24 and the second end 32 of the tensioning strap with each other and which may be adapted to extend in the longitudinal direction of the tensioning strap 7. In the case the tensioning strap 7 is divided into a first strap part 14 and a second strap part 15, at least one tensioning device 46 may be provided at both the first strap part 14 and the second strap part 15 as shown in the fig 4. In an alternative embodiment, it is possible to provide at least one tensioning device 46 at one strap part 14,15 only. In a further embodiment, at least one tensioning strap 7 may extend around the gas tanks 4 between two brackets 8. At least one tensioning device 46 may in this case be provided at a strap part facing the side beam 3 and/or provided at a strap part facing the ground on which the vehicle is placed. Each tensioning device 46 may comprise a first fastening element 48, a second fastening element 49 and a gap 50 between them. The gap 50 gets wider when the tanks 4 expands and narrower when the tanks 4 contracts. This results in that the tensioning strap 7 follows the diameter changes of the tanks 4 and in high holding forces both in the expanded and in the contracted phase of the tanks 4.

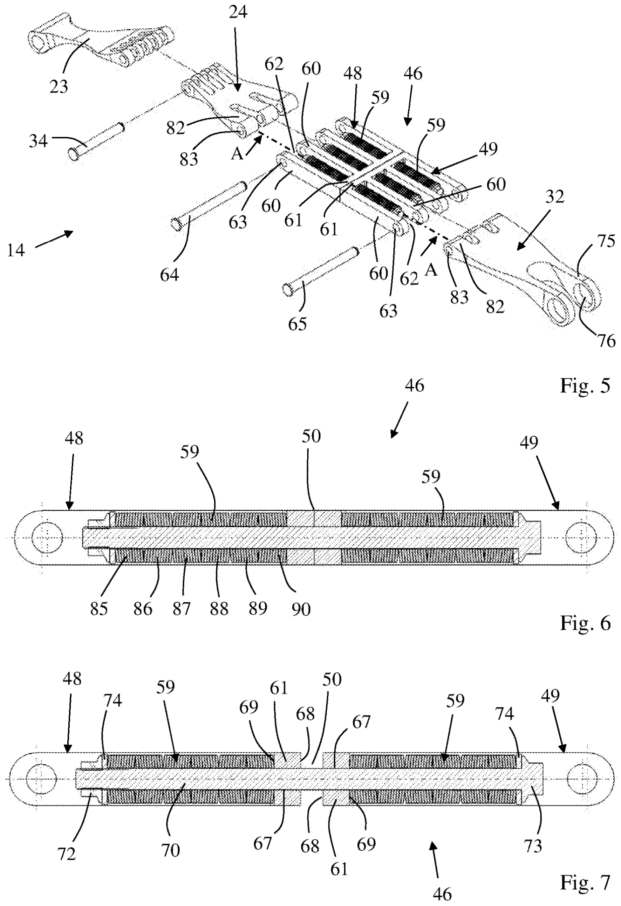

Fig. 5 shows an exploded view of a the first strap part 14. The second strap part 15 (fig. 4) and a strap part facing the side beam 3 and/or the ground may be of similar design. Further, fig 5 shows that the tensioning devise 46 may comprise at least one first fork-shaped fastening element 48 and at least one second fork-shaped fastening element 49. Each fastening element 48,49 may comprise at least two, but in this example four, shanks 60 spaced apart from one another and arranged essentially in parallel to each other. The shanks 60 are connected to each other by a crosspiece 61. The shanks 60 and the crosspiece 61 defines a u-shaped space 62 through which at least one spring means 59 extends. In an alternative embodiment, it is possible to let two or more spring means 59 extend side by side in one and the same U-shaped space 62. The shanks 60 are adapted to at least partly extend along corresponding shanks 82 at the first end 24 of each strap part 14,15 and at the second end 32 of each strap part 14,15 and comprises through holes 63 at their free ends which are adapted to aligned with corresponding through holes 83 at the first end 24 and at the second end 32. Pins 64,65 preferably clevis pins, are adapted to extend through the holes 63,83 with its longitudinal direction transversely to the longitudinal direction of the tensioning device 46 to connect the first fastening element 48 pivotally to the first end 24 and the second fastening element 49 pivotally to the second end 32. The pins 64,65 may have thinner portions close to their ends for seating in the holes 63,83 so as to prevent the pins 64,65 from escaping from the holes 63,83. Locking rings, collars or similar can also be used for this purpose. Further, fig 5 shows that the second end 32 may comprise an U-shaped end having two shanks 75 spaced apart from one another and arranged essentially parallel, both with through holes 76 through which the pin 44 (fig. 2) is adapted to extend. Fig. 5 also shows that the first end 24 may be connected to the holding devise 23 by the first pin 34, which holding device 23 in turn may be connected to the bracket 8 by the second pin 39 (fig. 3). In an alternative embodiment the first end 24 may be connected to the first and/or the second free shank 25,28 (fig. 2) without any intermediate holding devise 23. The spring means 59 may also be referred to as resilient means 59 since any spring-type, elastic element or resilient element may be used for causing the holding force in the embodiments herein.

As can be seen in fig 7, which shows a longitudinal section in the plane A-A in fig. 5 when the fuel tanks 4 are in their expanded phase, each crosspiece 61 comprises a through hole 67, a first surface 68 and a second surface 69. The first fastening element 48 and the second fastening element 49 are arranged with the first surfaces 68 turned towards each other and with their holes 67 aligned with each other. A connecting element 70, e.g. a screw or a at least partially threaded rod or the like extends displaceably through the holes 67 in the crosspiece 61, between the first fastening element 48 and the second fastening element 49. A first end of the connecting element 70 has a first fastening member 72 which for example may be a nut or the head of a screw. A second end of the connecting element 70 has a second fastening member 73 which for example may be a nut or the head of a screw. The nuts may be selflocking nuts. At least one spring means 59 is arranged in each fastening element 48,49 and is acting between the first end 24 and the second end 32 of the tensioning strap 7 (fig.5) whereby a spring load of the spring means 59 applies a holding force of the tensioning strap 7 to the gas tanks 4 regardless of whether the gas tanks 4 are expanded or not by allowing the first fastening element 48 and the second fastening element 49 to be moved along the connecting element 70 in its longitudinal direction and thereby increase or decrease the gap 50 between the first- and the second fastening element 48,49 when the diameter of the tanks 4 changes. The spring means 59 may be arranged coaxially around the connecting element 70 and extends between the second surfaces 69 and the fastening members 72,73. The spring means 59 may for example be a helical spring, e.g. a compression spring, or a number of cup springs stacked on each other or one or several gas springs. At least one washer 74 may be fitted between the spring means 59 and the fastening members 72,73.

In Fig. 5-7 corresponding surfaces and parts of the first and second fastening elements 48, 49 are denominated with same reference numbers 59, 60, 61, 68, 69 for facilitated reading. The surfaces and parts related to the first fastening element 48 may alternatively be denominated with reference numbers 59', 60', 61', 68', 69' and the surfaces and parts related to the second fastening element 49 may alternatively be denominated with reference numbers 59", 60", 61", 68", 69".

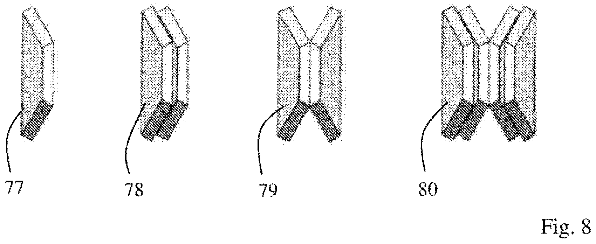

When cup springs are used it is possible to obtain an attaching structure with high holding forces in a small space. Further, by stacking the cup springs differently and use cup springs of different thickness and number it is possible to obtain different holding forces and spring characteristics in an advantageous manner. Fig. 8 shows a single cup spring 77, cup springs in parallel 78 i.e. cup springs laid one on the other, cup springs in series 79 i.e. cup springs laid one against another and a combination of cup springs in series and cup springs in parallel 80. All these formations have different spring characteristic. The cup springs in a formation may be of identical dimensions but it is feasible to stack numbers of cup springs with different thickness in order to achieve a stepped spring characteristic. For example, cup springs with increasing thickness may be stacked to receive progressive spring characteristics.

When cup springs are used in the fuel tank attaching structure in fig. 5 the cup springs may be stacked according to what is shown in fig. 8 or in any other way suitable for the application in question. In one preferred embodiment, for example the one in fig. 6, the cup springs may be stacked in series and parallel 80. Such a combination may consist of six packages 85,86,87,88,89,90 each including 10 cup springs in parallel, which packages are arranged in series. Such a combination may have a length of 40-100 mm.

Fig 4 and 6 shows the tensioning device 46 when the gas tanks 4 are in their contracted phase and surrounded by the tensioning strap 7. The gap 50 between the first fastening element 48 and the second fastening 49 may be relatively small or absent. The spring means 59 brings about a suitable holding force in the longitudinal direction of the tensioning strap 7 to the gas tanks 4. The holding force may be 30-45 kN. When the gas tanks 4 expands, the first fastening element 48 and the second fastening element 49 moves away from one another in the longitudinal direction of the connecting element 70. The gap 50 expands as can be seen in fig 7 and the spring means 59 are pressed together and absorbs the expansion so that the tensioning strap 7 can enlarge its diameter to fasten the gas tanks 4 as before the expansion. During gas consumption the gas tanks 4 contracts and the first fastening element 49 and the second fastening element 49 moves towards each other in the longitudinal direction of the connecting element 70 by spring force from the spring means 59 which expands and tensions the tensioning strap 7 to fasten the gas tanks 4 as before the contraction.

The invention is not limited to the described embodiments, but many possibilities to modifications thereof will be apparent to those skilled in the art without thereby deviating from the scope of the following claims. For example, the number of shanks 60 and the number of spring means 59 may vary depending on the forces required to keep the tanks in place.

## Claims

1. A fuel tank attaching structure (5) for a motor vehicle (1) having at least one expandable and contractible fuel tank (4) for storing compressed gas mounted thereon, the fuel tank attaching structure (5) comprising at least one bracket (8) arranged to be fixed to a vehicle chassis (2) for support of the at least one fuel tank (4) and at least one tensioning strap (7) arranged to be mounted around the fuel tank (4) and adapted to fasten the fuel tank (4) to the bracket (8), which tensioning strap (7) comprises a first end (24) and a second end (32) between which a tensioning device (46) is arranged to apply a holding force of the tensioning strap (7) to the gas tank (4), ***characterised in* that** the tensioning device (46) comprises at least one first fastening element (48) which is adapted to be connected to the first end (24) of the tensioning strap (7) and a crosspiece (61) having a first surface (68) and a second surface (69), at least one second fastening element (49) which is adapted to be connected to the second end (32) of the tensioning strap (7) and a further crosspiece (61) having a first surface (68) and a second surface (69), the first fastening element (48) and the second fastening element (49) are adapted to be arranged with their first surfaces (68) turned towards each other, at least one connecting element (70) adapted to extend displaceably through a hole (67) in each crosspiece (61) between the first fastening element (48) and the second fastening element (49), a first fastening member (72) adapted to be connected to a first end of the connecting element (70), a second fastening member (73) adapted to be connected to a second end of the connecting element (70) and spring means (59) adapted to extend between the first fastening member (72) and the second surface (69) and between the second fastening member (73) and the second surface (69) whereby the spring means (59) is arranged to apply a holding force of the tensioning strap (7) to the gas tanks (4) regardless of whether the gas tanks (4) are in an expanded or contracted state by allowing the first fastening element (48) and the second fastening element (49) to be moved in the longitudinal direction of the connecting element (70).

2. A fuel tank attaching structure (5) according to claim 1, ***characterised in* that** the first fastening element (48) and the second fastening element (49) are fork-shaped and comprising at least two shanks (60) spaced apart from each other and connected to each other by the crosspiece (61), the shanks (60) are adapted to at least partly extend along corresponding shanks (82) at the first end (24) and at the second end (32) and comprises through holes (63) at their free ends which are adapted to aligned with corresponding through holes (83) at the first end (24) and at the second end (32) whereby pins (64,65) are adapted to extend through the holes (63,83) to connect the first fastening element (48) to the first end (24) and the second fastening element (49) to the second end (32).

3. A fuel tank attaching structure (5) according to claim 2, ***characterised in* that** the shanks (60) and the crosspiece (61) defines a u-shaped space (62) through which the spring means (59) extends.

4. A fuel tank attaching structure (5) according to claim 1 or 2, ***characterised in* that** the first fastening element (48) is pivotally connected to the first end (24) and **in that** the second fastening element (49) is pivotally connected to the second end (32).

5. A fuel tank attaching structure (5) according to claim 1, ***characterised in* that** the tensioning devise (46) is adapted to extend in the longitudinal direction of the tensioning strap (7).

6. A fuel tank attaching structure (5) according to claim 1, ***characterised in* that** the tensioning strap (7) is divided into a first strap part (14) and a second strap part (15) and **in that** a tensioning devise (46) is provided at both the first strap part (14) and the second strap part (15).

7. A fuel tank attaching structure (5) according to claim 1, ***characterised in* that** the spring means (59) is arranged coaxially around the connecting element (70).

8. A fuel tank attaching structure (5) according to claim 7, ***characterised in* that** the spring means (59) comprises a number of cup springs (77) stacked on each other.

9. A fuel tank attaching structure (5) according to claim 8, ***characterised in* that** the cup springs (77) are stacked in series and substantially in parallel (84) relatively each other.

10. A fuel tank attaching structure (5) according to claim 8, ***characterised in* that** the length of the spring means (59) is 40-100 mm.

11. A motor vehicle (1) comprising a fuel tank attaching structure (5) according to any one of claims 1-10.

## Patentansprüche

1. Struktur zum Anbringen eines Kraftstofftanks (5) an einem Kraftfahrzeug (1) mit wenigstens einem daran befestigten expandierbaren und zusammenziehbaren Kraftstofftank (4), um darin komprimiertes Gas zu speichern, wobei die Struktur zum Anbringen eines Kraftstofftanks (5) wenigstens eine Halterung (8) umfasst, die dazu ausgebildet ist, an einem Fahrzeugfahrgestell (2) fixiert zu werden, um den wenigstens einen Kraftstofftank (4) und den wenigstens einen Spanngurt (7) zu stützen, der dazu ausgebildet ist, um den Kraftstofftank (4) herum befestigt zu werden und dazu ausgebildet ist, den Kraftstofftank (4) an der Halterung (8) zu befestigen, wobei der Spanngurt (7) ein erstes Ende (24) und ein zweites Ende (32) umfasst, zwischen denen eine Spannvorrichtung (46) dazu ausgebildet ist, eine Haltekraft des Spanngurts (7) auf den Kraftstofftank (4) anzuwenden, **dadurch *gekennzeichnet,* dass** die Spannvorrichtung (46) wenigstens ein erstes Befestigungselement (48), das dazu ausgebildet ist, mit dem ersten Ende (24) des Spanngurts (7) und einem Querstück (61) verbunden zu werden, der eine erste Oberfläche (68) und eine zweite Oberfläche (69) aufweist, wenigstens ein zweites Befestigungselement (49), das dazu ausgebildet ist, mit dem zweiten Ende (32) des Spanngurts (7) und einem weiteren Querstück (61) verbunden zu werden, der eine erste Oberfläche (68) und eine zweite Oberfläche (69) aufweist, wobei das erste Befestigungselement (48) und das zweite Befestigungselement (49) dazu ausgebildet sind, so angeordnet zu werden, dass ihre ersten Oberflächen (68) einander zugewandt sind, wenigstens ein Verbindungselement (70), das darauf ausgelegt ist, sich verlagerbar durch ein Loch (67) in jedem Querstück (61) zwischen dem ersten Befestigungselement (48) und dem zweiten Befestigungselement (49) zu erstrecken, ein erstes Befestigungselement (72), das dazu ausgebildet ist, mit einem ersten Ende des Befestigungselements (70), einem zweiten Befestigungselement (73), das dazu ausgebildet ist, mit einem zweiten Ende des Befestigungselements (70) und einer Federungseinrichtung (59), die dazu ausgebildet ist, sich zwischen dem ersten Befestigungselement (72) und der zweiten Oberfläche (69) und zwischen dem zweiten Befestigungselement (73) und der zweiten Oberfläche (69) zu erstrecken, verbunden zu werden, umfasst, wobei die Federungseinrichtung (59) dazu ausgebildet ist, unabhängig davon, ob sich die Kraftstofftanks (4) in einem expandierten oder zusammengezogenen Zustand befinden, eine Haltekraft des Spanngurts (7) auf die Kraftstofftanks (4) auszuüben, indem das erste Befestigungselement (48) und das zweite Befestigungselement (49) in Längsrichtung des Verbindungselements (70) bewegt werden können.

2. Struktur zum Anbringen eines Kraftstofftanks (5) nach Anspruch 1, **dadurch *gekennzeichnet,* dass** das erste Befestigungselement (48) und das zweite Befestigungselement (49) gabelförmig sind und wenigstens zwei Schenkel (60) umfassen, die voneinander beabstandet sind und durch ein Querstück (61) miteinander verbunden sind, wobei die Schenkel (60) dazu ausgebildet sind, sich zumindest teilweise entlang der entsprechenden Schenkel (82) am ersten Ende (24) und am zweiten Ende (32) zu erstrecken und and ihren freien Enden Durchgangsbohrungen (63) umfassen, die dazu ausgebildet sind, mit den entsprechenden Durchgangsbohrungen (83) am ersten Ende (24) und am zweiten Ende (32) ausgerichtet zu sein, wobei die Stifte (64, 65) dazu ausgebildet sind, sich durch die Löcher (63, 83) zu erstrecken, um das erste Befestigungselement (48) mit dem ersten Ende (24) zu verbinden und das zweite Befestigungselement (49) mit dem zweiten Ende (32) zu verbinden.

3. Struktur zum Anbringen eines Kraftstofftanks (5) nach Anspruch 2, **dadurch *gekennzeichnet,* dass** die Schenkel (60) und das Querstück (61) einen U-förmigen Bereich (62) definieren, durch den sich die Federungseinrichtung (59) erstreckt.

4. Struktur zum Anbringen eines Kraftstofftanks (5) nach Anspruch 1 oder 2, **dadurch *gekennzeichnet,* dass** das erste Befestigungselement (48) schwenkbar mit dem ersten Ende (24) verbunden ist und dass das zweite Befestigungselement (49) schwenkbar mit dem zweiten Ende (32) verbunden ist.

5. Struktur zum Anbringen eines Kraftstofftanks (5) nach Anspruch 1, **dadurch *gekennzeichnet,* dass** die Spannvorrichtung (46) dazu ausgebildet ist, sich in Längsrichtung des Spanngurts (7) zu erstrecken.

6. Struktur zum Anbringen eines Kraftstofftanks (5) nach Anspruch 1, **dadurch *gekennzeichnet,* dass** der Spanngurt (7) in einen ersten Gurtteil (14) und einen zweiten Gurtteil (15) unterteilt ist und dass die Spannvorrichtung (46) sowohl am ersten Gurtteil (14) als auch am zweiten Gurtteil (15) vorgesehen ist.

7. Struktur zum Anbringen eines Kraftstofftanks (5) nach Anspruch 1, **dadurch *gekennzeichnet,* dass** die Federungseinrichtung (59) koaxial um das Verbindungselement (70) angeordnet ist.

8. Struktur zum Anbringen eines Kraftstofftanks (5) nach Anspruch 7, **dadurch *gekennzeichnet,* dass** die Federungseinrichtung (59) eine Anzahl von Tellerfedern (77) umfasst, die aufeinandergestapelt sind.

9. Struktur zum Anbringen eines Kraftstofftanks (5) nach Anspruch 8, **dadurch *gekennzeichnet,* dass** die Tellerfedern (77) der Reihe nach und im Wesentlichen parallel (84) relativ zueinander aufeinandergestapelt sind.

10. Struktur zum Anbringen eines Kraftstofftanks (5) nach Anspruch 8, **dadurch *gekennzeichnet,* dass** die Länge der Federungseinrichtung (59) 40-100 mm beträgt.

11. Kraftfahrzeug (1) umfassend eine Struktur zum Anbringen eines Kraftstofftanks (5) nach einem der Ansprüche 1-10.

## Revendications

1. Structure d'attache de réservoir de carburant (5) pour un véhicule à moteur (1) sur lequel est monté au moins un réservoir de carburant (4) déployable et rétractable destiné à stocker du gaz comprimé, la structure d'attache de réservoir de carburant (5) comprenant au moins une ferrure (8) agencée pour être fixée à un châssis de véhicule (2) pour le support de l'au moins un réservoir de carburant (4) et au moins une sangle de tensionnement (7) agencée pour être montée autour du réservoir de carburant (4) et adaptée pour arrimer le réservoir de carburant (4) à la ferrure (8), laquelle sangle de tensionnement (7) comprend une première extrémité (24) et une deuxième extrémité (32) entre lesquelles un dispositif de tensionnement (46) est agencé pour appliquer une force de maintien de la sangle de tensionnement (7) au réservoir de gaz *(4),* ***caractérisée en ce* que** le dispositif de tensionnement (46) comprend au moins un premier élément d'arrimage (48) qui est adapté pour être raccordé à la première extrémité (24) de la sangle de tensionnement (7) et une pièce transversale (61) ayant une première surface (68) et une deuxième surface (69), au moins un deuxième élément d'arrimage (49) qui est adapté pour être raccordé à la deuxième extrémité (32) de la sangle de tensionnement (7) et une autre pièce transversale (61) ayant une première surface (68) et une deuxième surface (69), le premier élément d'arrimage (48) et le deuxième élément d'arrimage (49) sont adaptés pour être agencés avec leurs premières surfaces (68) tournées l'une vers l'autre, au moins un élément de raccordement (70) adapté pour s'étendre de manière déplaçable à travers un trou (67) dans chaque pièce transversale (61) entre le premier élément d'arrimage (48) et le deuxième élément d'arrimage (49), un premier organe d'arrimage (72) adapté pour être raccordé à une première extrémité de l'élément de raccordement (70), un deuxième organe d'arrimage (73) adapté pour être raccordé à une deuxième extrémité de l'élément de raccordement (70) et un moyen de ressort (59) adapté pour s'étendre entre le premier organe d'arrimage (72) et la deuxième surface (69) et entre le deuxième organe d'arrimage (73) et la deuxième surface (69) moyennant à quoi le moyen de ressort (59) est agencé pour appliquer une force de maintien de la sangle de tensionnement (7) aux réservoirs de gaz (4) indépendamment du fait que les réservoirs de gaz (4) sont dans l'état déployé ou rétracté en permettant au premier élément d'arrimage (48) et au deuxième élément d'arrimage (49) d'être déplacé dans la direction longitudinale de l'élément de raccordement (70).

2. Structure d'attache de réservoir de carburant (5) selon la revendication 1, ***caractérisée en ce* que** le premier élément d'arrimage (48) et le deuxième élément d'arrimage (49) sont en forme de fourche et comprennent au moins deux tiges (60) espacées l'une de l'autre et raccordées l'une à l'autre par la pièce transversale (61), les tiges (60) sont adaptées pour s'étendre au moins partiellement le long de tiges (82) correspondantes à la première extrémité (24) et à la deuxième extrémité (32) et comprennent des trous traversants (63) à leurs extrémités libres qui sont adaptés pour être alignés avec des trous traversants (83) correspondants à la première extrémité (24) et à la deuxième extrémité (32) moyennant quoi des broches (64, 65) sont adaptés pour s'étendre à travers les trous (63, 83) afin de raccorder le premier élément d'arrimage (48) à la première extrémité (24) et le deuxième élément d'arrimage (49) à la deuxième extrémité (32).

3. Structure d'attache de réservoir de carburant (5) selon la revendication 2, ***caractérisée en ce* que** les tiges (60) et la pièce transversale (61) définissent un espace en forme de U (62) à travers lequel s'étend le moyen de ressort (59).

4. Structure d'attache de réservoir de carburant (5) selon la revendication 1 ou 2, ***caractérisée en ce* que** le premier élément d'arrimage (48) est raccordé pivotant à la première extrémité (24) et **en ce que** le deuxième élément d'arrimage (49) est raccordé pivotant à la deuxième extrémité (32).

5. Structure d'attache de réservoir de carburant (5) selon la revendication 1, ***caractérisée en ce* que** le dispositif de tensionnement (46) est adapté pour s'étendre dans la direction longitudinale de la sangle de tensionnement (7).

6. Structure d'attache de réservoir de carburant (5) selon la revendication 1, ***caractérisée en ce* que** la sangle de tensionnement (7) est divisée en une première partie de sangle (14) et une deuxième partie de sangle (15) et **en ce qu'**un dispositif de tensionnement (46) est prévu au niveau d'à la fois la première partie de sangle (14) et la deuxième partie de sangle (15).

7. Structure d'attache de réservoir de carburant (5) selon la revendication 1, ***caractérisée en ce* que** le moyen de ressort (59) est agencé coaxialement autour de l'élément de raccordement (70).

8. Structure d'attache de réservoir de carburant (5) selon la revendication 7, ***caractérisée en ce* que** le moyen de ressort (59) comprend un certain nombre de ressorts en coupelle (77) empilés les uns sur les autres.

9. Structure d'attache de réservoir de carburant (5) selon la revendication 8, ***caractérisée en ce* que** les ressorts en coupelle (77) sont empilés en série et sensiblement en parallèle (84) les uns par rapport aux autres.

10. Structure d'attache de réservoir de carburant (5) selon la revendication 8, ***caractérisée en ce* que** la longueur du moyen de ressort (59) est de 40 à 100 mm.

11. Véhicule à moteur (1) comprenant une structure d'attache de réservoir de carburant (5) selon l'une quelconque des revendications 1 à 10.
